# EUROPEAN PATENT SPECIFICATION

(11) **EP 3 161 646 B1**
(45) Date of publication and mention of the grant of the patent: **22.01.2025**
(21) Application number: 15811782.0
(22) Date of filing: 26.06.2015
(51) Int. Cl.: G06F 21/10, H04L 9/40

(54) **SYSTEM AND METHOD FOR INDENTIFICATION OF NON-HUMAN USERS ACESSING CONTENT**
SYSTEM UND VERFAHREN ZUR IDENTIFIKATION VON ZUGRIFF AUF INHALT DURCH NICHT-MENSCHLICHE BENUTZER
SYSTÈME ET PROCÉDÉ POUR L'IDENTIFICATION D'UTILISATEURS NON HUMAINS ACCÉDANT À UN CONTENU

(30) Priority: 26.06.2014 US 201414315430
(43) Date of publication of application: 03.05.2017
(73) Proprietor: Double Verify Inc., New York, NY 10018 (US)
(72) Inventor: MCLAUGHLIN, Matthew, Severna Park, MD 21146 (US); ROSENFELD, Roy, Kalman, 63504 Jersalem (IL); GOMEZ, Ryan, Anthony, New York, NY 10002 (US); DOADES, Aaron, New York, NY 10014 (US)
(74) Representative: WP Thompson
(86) International application number: PCT/US2015/038006
(87) International publication number: WO 2015/200808

(56) References cited:
- US-A1- 2010 070 620
- US-A1- 2010 281 539
- US-A1- 2010 281 539
- US-A1- 2013 014 020
- US-A1- 2013 097 699
- US-A1- 2013 291 107
- US-A1- 2014 090 059
- US-A1- 2014 136 338
- OMER DUSKIN ET AL: "Distinguishing humans from robots in web search logs", WEB SEARCH CLICK DATA, ACM, 2 PENN PLAZA, SUITE 701 NEW YORK NY 10121-0701 USA, 9 February 2009 (2009-02-09), pages 15 - 19, XP058088583, ISBN: 978-1-60558-434-8, DOI: 10.1145/1507509.1507512
- "Botnet Detection", vol. 36, 30 October 2007, SPRINGER US, Boston, MA, ISBN: 978-0-387-68766-7, article STRAYER W. TIMOTHY ET AL: "Botnet Detection Based on Network Behavior", pages: 1 - 24, XP055945988, DOI: 10.1007/978-0-387-68768-1_1

## Description

### BACKGROUND OF THE INVENTION

### 1. Field of the Invention

The present invention relates to identifying whether users of computerized devices that are accessing content are likely non-human.

### 2. Description of the Related Art

In the past few years, there has been a significant increase in the number of automated non-human user software, known as "bots", browsing the internet. Some of these bots are used for legitimate purposes to analyze and classify content across the World Wide Web. For example, GOOGLE^{®} uses bots to gather content to be indexed for their search services. However, some other types of bots are used for illegitimate and many times for fraudulent purposes. One such illegitimate usage is the artificial inflation of impression counts (number of times an advertisement is viewed) and/or impression clicks (number of times an advertisement is clicked) in order to fraudulently profit from getting paid based on those inflated numbers.

These bots are very difficult to identify because they may originate from a server farm or from regular user computers, computers that real and unsuspecting humans use to legitimately view web pages or other types of digital content. The bots can spread and infect a computer through malware, adware, malvertising, viruses, plugins, email attachments, apps, websites, or through any other means.

A need arises for effective techniques that can be used to identify illegitimate non-human users that are accessing content.

Prior art document US 2013/097699 A1 discloses a method of mitigating an application distributed denial of service (DDoS) attack on a network includes receiving at an application DDoS mitigation appliance application layer logs, parsing the application layer logs into an application layer forensic file, comparing an entry of the application layer forensic file with a human behaviour profile to determine a malicious qualifier associated with an application DDoS attack on the network, parsing the application layer log into a per-source forensic file, comparing an entry of the per-source forensic files with the malicious qualifier to determine a malicious Internet protocol (IP) addresses associated with the application DDoS attack, and providing the malicious IP address to a network device, wherein the network device drops network traffic associated with the application DDoS attack based upon the malicious IP address.

Prior art document US 2014/090059 A1 discloses a systems and method for facilitating the programmatic purchase of online advertising space as part of a real-time bidding auction. In particular, a second real-time bidding auction may be conducted during a first real-time bidding auction for the same advertising space. A winning bid in the second real-time auction may be modified and submitted as a bid to the first real-time auction in order to increase market participation, liquidity, win rates, and volume within an online advertising exchange.

Prior art document US 2010/281539 A1 discloses a technique for determining whether a network session originates from an automated software agent. In one example, a network device, such as a router, includes a network interface to receive packets of a network session, a bot detection module to calculate a plurality of scores for network session data based on a plurality of metrics, wherein each of the metrics corresponds to a characteristic of a network session originated by an automated software agent, to produce an aggregate score from an aggregate of the plurality of scores, and to determine that the network session is originated by an automated software agent when the aggregate score exceeds a threshold, and an attack detection module to perform a programmed response when the network session is determined to be originated by an automated software agent.; Each score represents a likelihood that the network session is originated by an automated software agent.

Prior art document XP058088583 - OMER DUSTKIN ET AL: "Distinguishing humans from robots in web search logs" discloses an approach based on a multi-dimensional characterisation of search sessions, and studies the interaction between the query submittal rate and the minimal interval of time between different queries.

Prior art document US 2013/014020 A1 discloses a method and system involving receiving an indicator of an attempted interaction of a client computing facility with an item of content associated with a website and presenting an indicator of reputation to a client computing facility attempting to interact with the web content. The indicator of reputation may be based at least in part upon whether an entity associated with the web content seeks to manipulate a user in order to obtain information from the user.

### Summary of the Invention

The present invention provides improved and effective techniques that can be used to identify illegitimate non-human user software that is accessing content. For example, a method of identifying non-human users of computerized devices may comprise receiving information relating to attributes relevant to the indication of non-human user software activity from a plurality of computerized devices, wherein at least a portion of the computerized devices are known to be infected with at least one non-human user software, and at least a portion of the computerized devices are known not to be infected with a non-human user software, selecting as factors a plurality of the attributes based on a correlation of the attribute with the presence of non-human user software activity, computing a score for each factor indicating a likelihood of non-human user software infection for that factor, and computing a combined score based on the scores of the individual factors.

For example, the computerized devices known to be infected with at least one non-human user software may be intentionally infected by loading infected malware onto the computerized devices. The computerized devices known to not be infected with at least one non-human user software may be identified based on users of those computerized devices having recently made an online action that is not indicative of a non-human user software. The computerized devices known to be infected with at least one non-human user software may be identified based on users of those computerized devices accessing digital content that is known to use non-human user software and the computerized devices known not to be infected with a non-human user software are identified based on users of those computerized devices accessing digital content that is known not to use non-human user software. The received information may be obtained from code embedded within digital content, the code collecting information about the computerized device and about activities of the computerized device. The received information may be obtained from bid requests in an advertising exchange. The received information may be obtained by analyzing log files of user device transactions. The method may further comprise receiving information relating to attributes relevant to the indication of non-human user software activity from another computerized device, computing a score for each factor for the another computerized device, computing a combined score based on the scores of the individual factors for the another computerized device, and determining a likelihood that the another computerized device includes non-human user software based on the combined score, the scores of the individual factors, or both.

As another example, a method of identifying non-human users of computerized devices may comprise receiving information relating to attributes relevant to the indication of non-human user software activity from a computerized device, computing a score for a plurality of factors that have been selected from among the attributes based on a correlation of the attribute with the presence of non-human user software activity, computing a combined score based on the scores of the individual factors, and determining a likelihood that the another computerized device includes non-human user software based on the combined score, the scores of the individual factors, or both. The factors may be selected by receiving information relating to attributes relevant to the indication of non-human user software activity from a plurality of computerized devices, wherein at least a portion of the computerized devices are known to be infected with at least one non-human user software, and at least a portion of the computerized devices are known not to be infected with a non-human user software and selecting as factors a plurality of the attributes based on a correlation of the attribute with the presence of non-human user software activity. The received information from the computerized device may be obtained from code embedded within digital content, the code collecting information about the computerized device and about activities of the computerized device. The received information from the computerized device may be obtained from bid requests in an advertising exchange. The received information from the computerized device may be obtained by analyzing log files of user device transactions.

### Brief Description of the Drawings.

Fig. 1 is an exemplary flow diagram of a process to distinguish between human and non-human generated traffic.
Fig. 2 is an exemplary block diagram of a system for distinguishing between human and non-human generated traffic using the process shown in Fig. 1.
Fig. 3 is an exemplary block diagram of a system for capturing information about attributes for distinguishing between human and non-human generated traffic from individual user devices.
Fig. 4 is an exemplary block diagram of a system for capturing information about attributes for distinguishing between human and non-human generated traffic from individual user devices.
Fig 5 is an exemplary block diagram of a user device, such as that shown in Figs. 2-4.
Fig 6 is an exemplary block diagram of a computer system, such as that in which the process shown in Fig. 1 may be implemented.

### Detailed Description of the Invention

One embodiment of the present invention provides improved and effective techniques that can be used to identify illegitimate non-human users that are accessing content.

There are a number of models that are currently used to measure the success of online advertising. These models include the pay per impression (CPM) model, in which the advertiser pays for every ad delivered to the browser of a user. In the pay per click (CPC) model, the advertiser pays only when an ad is delivered AND clicked on by a user. The advertiser may pay based on the total number of clicks or based on other measure. In the pay per conversion (CPA) model, the advertiser pays only when the user completes a predefined transaction, such as signing up for a service, purchasing an item on the website, filling out a form, etc. Typically, the advertiser pays based on the number of completed transactions that occur from among the total ads delivered.

As a result, if one can deliver more ad impressions and/or demonstrate higher click and/or conversion rates they are rewarded financially, either via increased advertising rates or increased advertising budgets that they receive (or both).

It is very easy for an automated bot to mimic the activities of a legitimate, human user for advertising that uses the CPM model. The bot merely has to visit a web page or other digital content and the ad will load and be delivered to the "user". A bot can therefore be programmed to visit a large number of pieces of digital content per day from a specified list to inflate the number of impressions served. To decrease suspicion and make it look as if this is legitimate user traffic, many thousands or hundreds of thousands of different bots can be used from different computers, each generating only a small number of ad impressions per day on each of the individual digital content pieces. The digital content visited by the bots may be owned by the bot operators, who therefore are directly profiting from this scheme. Alternatively, digital content visited by the bots may be owned by others that are paying the bot operators to drive incremental "visitors" to their content (many times unaware that these new "visitors" are bots not humans). Bots may also visit sites that do not directly contract or do business with the bot operators and the bot operators may not be directly benefiting from those visits, but have significant indirect benefits for them. Bot operators use these types of visits to "legitimate" sites to decrease suspicion that these are malicious bots and also for the bots to get "tagged" by ad targeting companies as "users" with specific interests based on the sites they visit and then deliver more expensive advertising to them, to the benefit of the bot operators. For example, automakers are willing to pay more money per ad to reach users that are actively in the market for a new car. A user that recently visited a car buying site such as AutoTrader or Kelley Blue Book (kbb.com) could be considered in market. The bot operator can therefore send the bots to visit a car buying site and get tagged as an "in-market car buyers". When the bot then visits the bot operator's website or a website that is paying the bot operator to drive traffic to them, the bot may then get served an ad from an automaker at a much higher average cost per ad since it was recognized as being an in-market car buyer, benefiting the bot operator directly. There are additional methods and advantages used by bot operator to avoid detection and increase the rate and value of ads they are exposed to.

Likewise, the CPC model is not too complex for an automated bot to mimic the activities of a legitimate, human user for advertising that uses the CPC model. All the bot needs to do is visit a web page or other digital content and simulate a click on an ad once the ad loads in order to get paid. Illegitimate bot usage of the CPC model would work similarly to the CPM model, but the bot would also click on the ad when it loads. To decrease suspicion, the bot might only click on one of every few ads that load.

The CPA model is more complex, as ads using the CPA model may differ by advertiser and by campaign. In order for a bot to mimic the activities of a legitimate, human user for advertising that uses the CPA model, the bot may be required to fill out complicated fields and inputs.

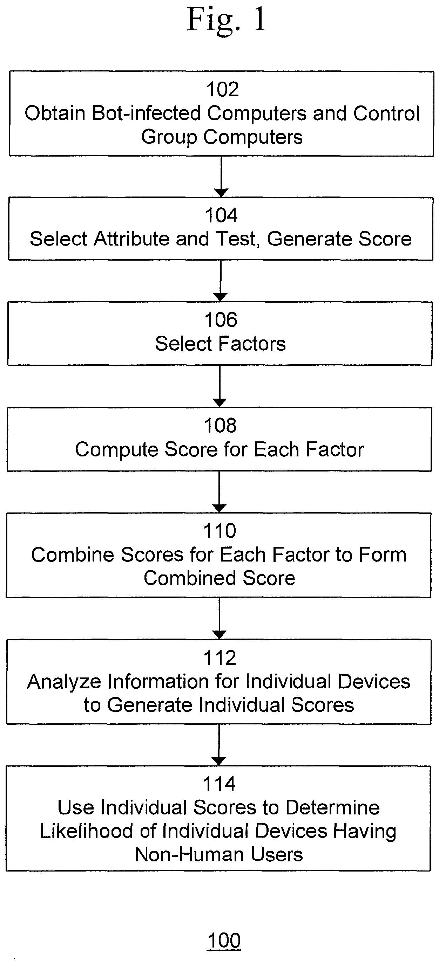

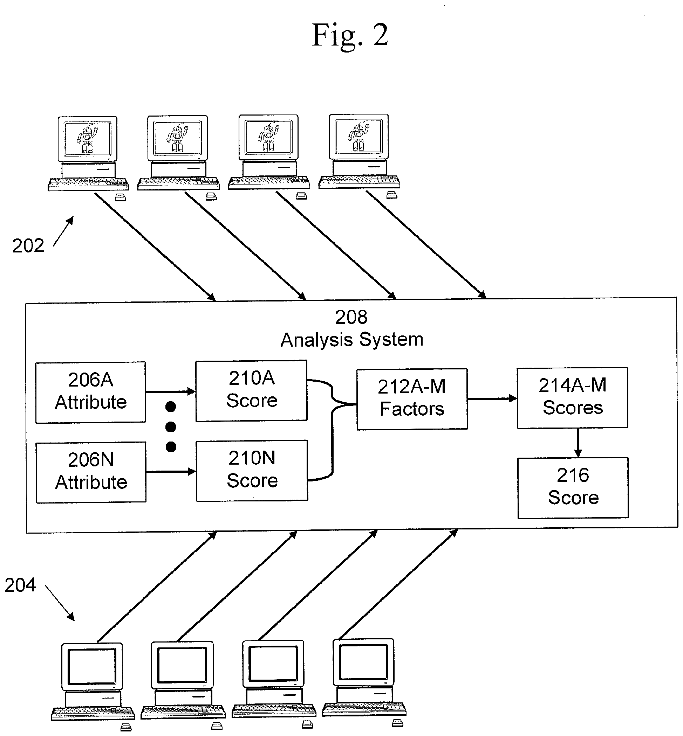

An example of a process 100 to distinguish between human and non-human generated traffic (impressions, clicks, and conversions generated by human or non-human visitors) is shown in Fig. 1. It is best viewed in conjunction with Fig. 2.

Process 100 begins with step 102, in which a group of bot-infected computers 202 and a group of non-infected computers 204 (control group) are obtained. Infected computers 202 and control group computers 204 are typically standard user-operated personal computers, such as desktop computers, laptop computers, tablet computers, etc. Such computers typically use one or more browser programs to access websites and other content on the Internet.

There are various methods of obtaining an infected group and a control group. For example, computers in a lab environment may be intentionally infected with automated bots by loading infected malware onto them to obtain the infected group. An exemplary way to obtain a control group of non-infected computers is to identify a set of computers whose users have recently made an online action that is too complex for an automated bot to carry out and therefore indicates this is human activity. Such actions could be filling out an online application, completing an e-commerce transaction or similar.

Another example of obtaining an infected group and a control group is to take as the infected group a group of users accessing digital content that is known to heavily use automated bots tactics to inflate ad counts. The control group is taken from a group of users accessing well-known respectable digital content, such as well-known news sites, that may be assumed to be mostly non-infected computers. Of course the infected and control groups would not be completely "clean", which means there still could be a small number of bots in the control group and a small number of humans in the infected group. However, this can be corrected for using statistical methods described below.

Another example of obtaining an infected group and a control group is to select one or more attributes whose values that can be highly correlated with bot behavior in certain ranges. For example, the number of web pages viewed by the user per day may be used. In this example, a number greater than 1000 implies high likelihood of a bot, and a number lower than 50 implies high likelihood of a legitimate user. A large number of computers would be checked and the infected and control groups formed accordingly. Computers falling between the selection ranges would be excluded in order to reduce the leakage of infected computers in the control group and non-infected computers in the infected group. In this example, even if there is a small amount of such leakage of a small number of infected computers in the control group and/or a small number of non-infected computers in the infected group, this leakage can be corrected for using statistical methods described below.

The above-described methods of obtaining an infected group and a control group are merely examples. The present invention contemplates any method of obtaining an infected group and a control group.

In step 104, after obtaining the infected group 202 and the control group 204, one or more attributes 206A-N relevant to the indication of bot activity are selected. Typically, there are a number of attributes 206A-N such that the presence of the attribute, or the attribute being within certain value ranges may indicate bot activity. Information relating to the selected attribute 206 is received from the infected group 202 and the control group 204 at Analysis System 208. This information is used to measure the values of the attribute 206 within both the infected group 202 and the control group 204. The measured values are tested using various statistical methods to determine whether the presence of the attribute 206 correlates with bot activity or whether certain values of the attribute 206 correlate with bot activity. Examples of such attributes include "number of pages viewed per time period", "time spent on page", "distribution of browsing throughout the day", as well as many other attributes. For example, bots are known to be active during times when the computer is idle and the user is not in front of the computer (to make it harder for the user to detect the bot). Therefore, when measuring "number of pages viewed per time period", a bot computer may show a very large number of pages viewed during the night time when the user is asleep. A score 210A-N is generated for each attribute 206A-N that reflects the likelihood of a browser to be a bot based on the value of the attribute 206A-N. Since multiple attributes 206A-N can be collected for each unique browser, the score 210A-N can further be refined to represent the likelihood of a browser in the infected group 202 or the control group 204 to be a bot based on the plurality of attribute values. Furthermore, a threshold score may be defined, wherein each unique browser that exceeds the threshold is identified as an automated bot with a high level of certainty.

In step 106, two or more attributes 206A-N are selected to be used as factors 212AM for analysis and scoring. While it is possible to obtain likely identification from one, this method generally employs two or more methods for increased accuracy and to determine overall scoring. A threshold may be determined for each of the factors 212A-M, by examining nominal activity within the control group and corresponding activity within the infected group. In step 108, a score 214A-M is computed based on the value of each factor 212A-M. In step 110, a combined score 216 is computed based on the value of the scores 214A-M. A threshold may be determined for combined score 216 as well. The score may be used to determine the identification of a certain browser as non-human operated and the likelihood of it being non-human operated.

In step 112, information from individual user devices may be obtained and analyzed. Typically, for these devices, it is not known beforehand whether or not the device includes a browser that is non-human operated. Using techniques similar to those used in steps 108 and 110, factor scores and a combined score may be generated for each individual device. In step 114, the factor scores, the combined score, or both, for the individual device may be compared to the thresholds determined in steps 108 and 1 10 to determine the likelihood that the individual device includes a browser that is non-human operated. Steps 112 and 114 may, of course be performed using data from a plurality of individual user devices to determine the likelihood that each individual device includes a browser that is non-human operated. Likewise, steps 112 and 114 may be performed repeated over time.

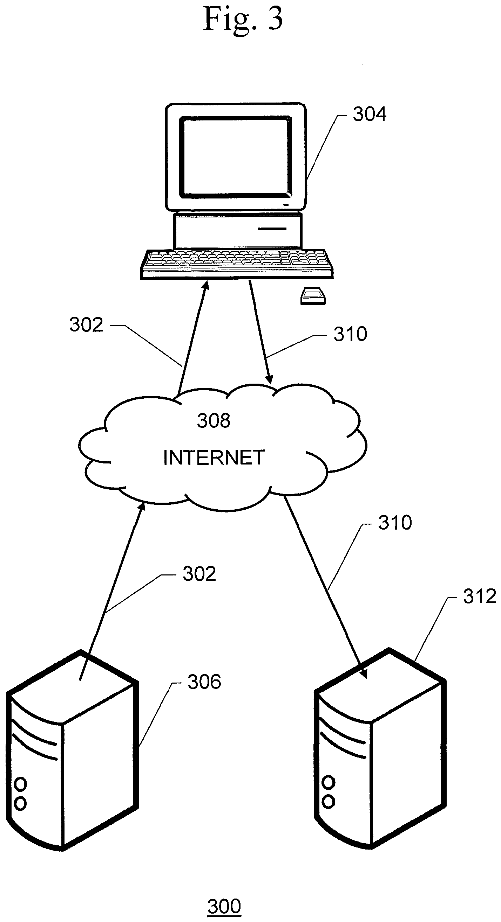

There are a number of ways in which information about the attributes may be captured from individual user devices, whether they are included in the infected group, the control group, or ultimately excluded from either group. For example, as shown in Fig. 3, within online advertisement serving environment 300, a piece of code may be embedded within one or more advertisements 302 served to a user device 304. Typically, the advertisement 302 will be served from a web server 306 over the Internet 308 to user device 304. The embedded code will execute on the user's device 304 whenever the advertisement 302 is delivered, collect some information 308 about the device, including a unique identification of the device (such as cookie, device fingerprinting, unique ID or other), and then send that information 310 to be logged in a database 312 as a "transaction". One may then inspect the transactions of a given unique device to look for the said attributes and their respective values. The more advertisements ones code is embedded in, the more effective this method becomes as it brings up more transactions for any unique browser.

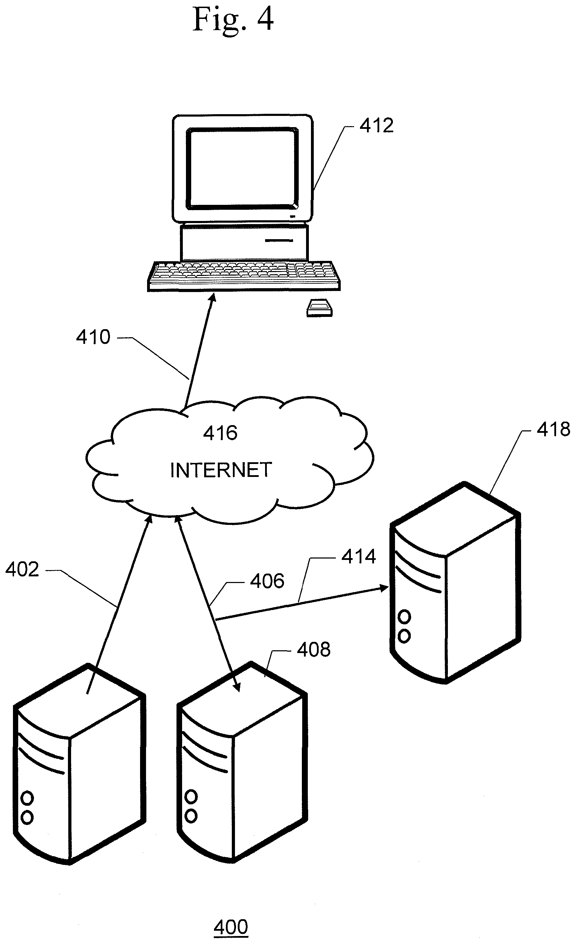

As another example, in an advertising exchange environment 400, as shown in Fig. 4, information may be collected by "listening" to bid requests in the advertising exchange environment. The advertising exchange environment is an exchange similar to a stock exchange, where one can bid on many of advertising transactions every second. Whenever a device loads a piece of digital content 402 with an ad unit 404 that participates in the exchange, the ad unit is put up for auction 406 and within less than a second sold to the highest bidding advertiser 408 and the advertisement gets delivered 410 to the device 412. When an advertisement 402 is put up for auction 406, it includes a unique ID that uniquely identifies the device 412. One can observe 414 these bids placed up for auction on the exchange and look for the attributes within unique device IDs. Because of the significant penetration of the exchanges (accounting today for more than 30% of the ads delivered on the Internet), this may be a very effective way to test attributes. An example of another method is to receive a log file which includes a plurality of transactions from one or more user devices. Each transaction could be a visit to a web page, or use of an app, or other kind of transaction, and may contain a unique user ID, timestamp, and additional information about the user device. The log file can then be analyzed to identify attributes that correspond to human or bot activity, or individual devices within the log file can be analyzed and scored for bot probability.

The approaches described above may be combined for increased coverage.

It is to be noted that although the Internet is shown as the communication network in Figs. 3 and 4, this is merely an example; the present invention is not limited to the use of the Internet. Rather, the present invention contemplates the use of any type of communication network, whether public or proprietary, whether LAN or WAN, and whether including the Internet as port of the communication path or not.

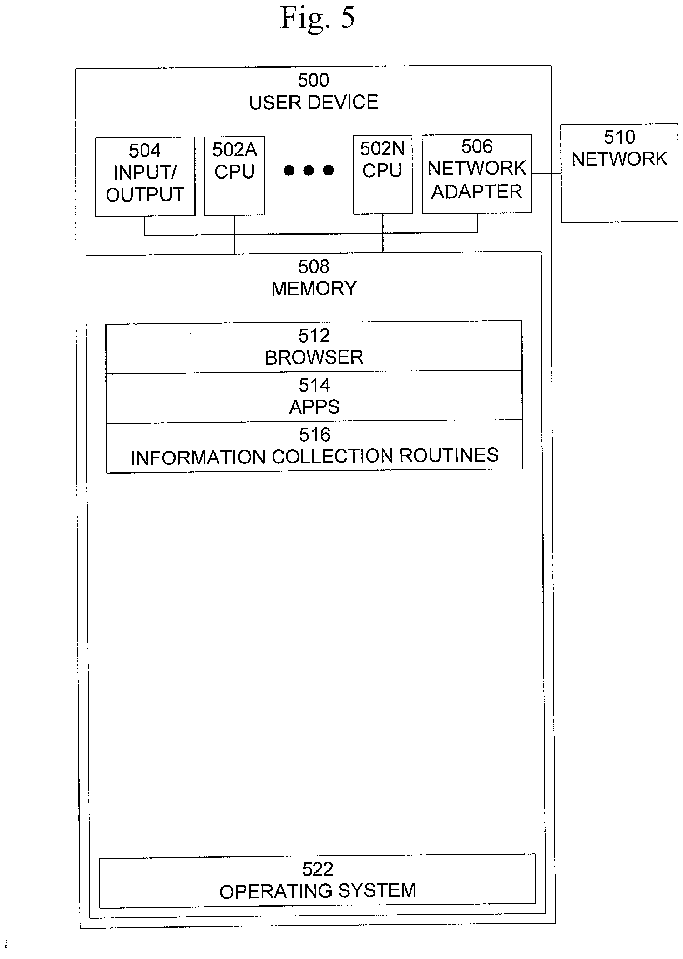

An exemplary block diagram of a user device 500, such as a user device shown in Figs. 2-4, is shown in Fig. 5. User device 500 is typically a programmed general-purpose computer system, such as a personal computer, tablet computer, mobile device, workstation, etc. User device 500 includes one or more processors (CPUs) 502A-502N, input/output circuitry 504, network adapter 506, and memory 508. CPUs 502A-502N execute program instructions in order to carry out the functions of the present invention. Typically, CPUs 502A-502N are one or more microprocessors, such as an INTEL PENTIUM^{®} processor. Fig. 5 illustrates an embodiment in which user device 500 is implemented as a single multi-processor computer system, in which multiple processors 502A-502N share system resources, such as memory 508, input/output circuitry 504, and network adapter 506. However, the present invention also contemplates embodiments in which user device 500 is implemented as a plurality of networked computer systems, which may be single-processor computer systems, multi-processor computer systems, or a mix thereof.

Input/output circuitry 504 provides the capability to input data to, or output data from, user device 500. For example, input/output circuitry may include input devices, such as keyboards, mice, touchpads, trackballs, scanners, etc., output devices, such as video adapters, monitors, printers, etc., and input/output devices, such as, modems, etc. Network adapter 506 interfaces user device 500 with a network 510. Network 510 may be any public or proprietary LAN or WAN, including, but not limited to the Internet.

Memory 508 stores program instructions that are executed by, and data that are used and processed by, CPU 502 to perform the functions of computerized device 500. Memory 508 may include, for example, electronic memory devices, such as random-access memory (RAM), read-only memory (ROM), programmable read-only memory (PROM), electrically erasable programmable read-only memory (EEPROM), flash memory, etc., and electro-mechanical memory, such as magnetic disk drives, tape drives, optical disk drives, etc., which may use an integrated drive electronics (IDE) interface, or a variation or enhancement thereof, such as enhanced IDE (EIDE) or ultra-direct memory access (UDMA), or a small computer system interface (SCSI) based interface, or a variation or enhancement thereof, such as fast-SCSI, wide-SCSI, fast and wide-SCSI, etc., or Serial Advanced Technology Attachment (SATA), or a variation or enhancement thereof, or a fiber channel-arbitrated loop (FC-AL) interface.

The contents of memory 508 varies depending upon the function that computerized device 500 is programmed to perform. In the example shown in Fig. 5, exemplary memory contents for a user device are shown. However, one of skill in the art would recognize that these functions, along with the memory contents related to those functions, may be included on one system, or may be distributed among a plurality of systems, based on well-known engineering considerations. The present invention contemplates any and all such arrangements.

In the example shown in Fig. 5, memory 508 may include browser software 512, apps 514, and information collection routines 516. Browser software 512 is typically used by a user device to access websites and other content on the Internet. Likewise, apps 514 may also be used by a user device to access websites and other content on the Internet. Information collection routines 514 may be used to gather information about the activity of browser software 512 and to deliver the gathered information to an analysis system. Operating system 522 provides overall system functionality.

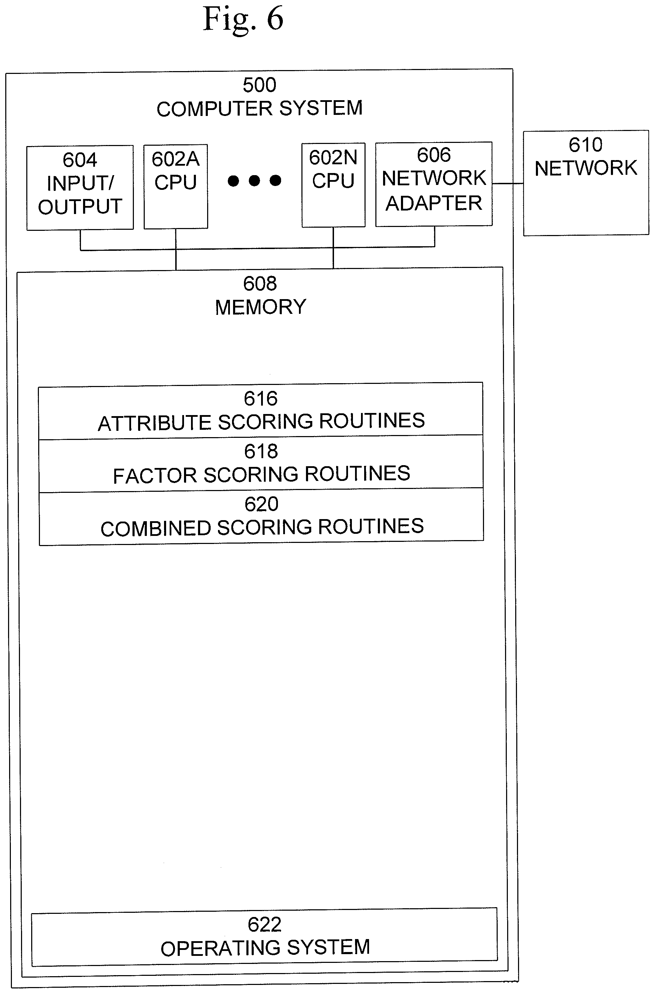

An exemplary block diagram of a computer system 600, such as computer systems in which the process shown in Fig. 1 may be implemented, is shown in Fig. 6. Computer system 600 is typically a programmed general-purpose computer system, such as a personal computer, tablet computer, mobile device, workstation, server system, minicomputer, mainframe computer, etc. Computer system 600 includes one or more processors (CPUs) 602A-602N, input/output circuitry 604, network adapter 606, and memory 608. CPUs 602A-602N execute program instructions in order to carry out the functions of the present invention. Typically, CPUs 602A-602N are one or more microprocessors, such as an INTEL PENTIUM^{®} processor. Fig. 6 illustrates an embodiment in which computer system 600 is implemented as a single multi-processor computer system, in which multiple processors 602A-602N share system resources, such as memory 608, input/output circuitry 604, and network adapter 606. However, the present invention also contemplates embodiments in which user computer system 600 is implemented as a plurality of networked computer systems, which may be single-processor computer systems, multi-processor computer systems, or a mix thereof.

Input/output circuitry 604 provides the capability to input data to, or output data from, user computer system 600. For example, input/output circuitry may include input devices, such as keyboards, mice, touchpads, trackballs, scanners, etc., output devices, such as video adapters, monitors, printers, etc., and input/output devices, such as, modems, etc. Network adapter 606 interfaces user device 600 with a network 610. Network 610 may be any public or proprietary LAN or WAN, including, but not limited to the Internet.

Memory 608 stores program instructions that are executed by, and data that are used and processed by, CPU 602 to perform the functions of computerized device 600. Memory 608 may include, for example, electronic memory devices, such as random-access memory (RAM), read-only memory (ROM), programmable read-only memory (PROM), electrically erasable programmable read-only memory (EEPROM), flash memory, etc., and electro-mechanical memory, such as magnetic disk drives, tape drives, optical disk drives, etc., which may use an integrated drive electronics (IDE) interface, or a variation or enhancement thereof, such as enhanced IDE (EIDE) or ultra-direct memory access (UDMA), or a small computer system interface (SCSI) based interface, or a variation or enhancement thereof, such as fast-SCSI, wide-SCSI, fast and wide-SCSI, etc., or Serial Advanced Technology Attachment (SATA), or a variation or enhancement thereof, or a fiber channel-arbitrated loop (FC-AL) interface.

The contents of memory 608 varies depending upon the function that computerized device 600 is programmed to perform. In the example shown in Fig. 6, exemplary memory contents for a for an analysis system are shown. However, one of skill in the art would recognize that these functions, along with the memory contents related to those functions, may be included on one system, or may be distributed among a plurality of systems, based on well-known engineering considerations. The present invention contemplates any and all such arrangements.

In the example shown in Fig. 6, memory 508 may include attribute scoring routines 516, factor scoring routines 518, and combined scoring routines 520. Attribute scoring routines 516 are used to compute a score that reflects the likelihood of a browser to be a bot based on the value of the attribute. Factor scoring routines 518 are used to compute a score that reflects the likelihood of a browser to be a bot based on the value of the factor. Combined scoring routines 520 are used to compute a score that reflects the likelihood of a browser to be a bot based on the value of all of the factors being considered. Operating system 622 provides overall system functionality.

As shown in Figs. 5 and 6, the present invention contemplates implementation on a system or systems that provide multi-processor, multi-tasking, multi-process, and/or multi-thread computing, as well as implementation on systems that provide only single processor, single thread computing. Multi-processor computing involves performing computing using more than one processor. Multi-tasking computing involves performing computing using more than one operating system task. A task is an operating system concept that refers to the combination of a program being executed and bookkeeping information used by the operating system. Whenever a program is executed, the operating system creates a new task for it. The task is like an envelope for the program in that it identifies the program with a task number and attaches other bookkeeping information to it. Many operating systems, including Linux, UNIX^{®}, OS/2^{®}, and Windows^{®}, are capable of running many tasks at the same time and are called multitasking operating systems. Multi-tasking is the ability of an operating system to execute more than one executable at the same time. Each executable is running in its own address space, meaning that the executables have no way to share any of their memory. This has advantages, because it is impossible for any program to damage the execution of any of the other programs running on the system. However, the programs have no way to exchange any information except through the operating system (or by reading files stored on the file system). Multi-process computing is similar to multi-tasking computing, as the terms task and process are often used interchangeably, although some operating systems make a distinction between the two.

It is important to note that while aspects of the present invention may be implemented in the context of a fully functioning data processing system, those of ordinary skill in the art will appreciate that the processes of the present invention are capable of being distributed in the form of a computer program product including a computer readable medium of instructions. Examples of non-transitory computer readable media include storage media, examples of which include, but are not limited to, floppy disks, hard disk drives, CD-ROMs, DVD-ROMs, RAM, and, flash memory.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. A method of identifying non-human user activity on a computerized device comprising:
selecting a plurality of attributes (206) relevant to computerised device activity;
receiving information relating to the plurality of attributes (206) from an infected device group comprising a plurality of computerized devices (202) that are known to be infected with at least one non-human user software and generating a score (210) for each of the plurality of attributes (206) for the infected device group;
receiving information relating to the plurality of attributes (206) from a control device group comprising a plurality of computerized devices (204) that are determined not to be infected with a non-human user software, and generating a score (210) for each of the plurality of attributes (206) for the control device group;
determining correlations between each of the plurality of attributes (206) and the presence of non-human user activity based on the attribute scores (210) generated from the infected device group and the control device group, and defining threshold scores for attributes (206) that are determined to correlate with the presence of non-human user activity;
selecting from the plurality of the attributes (206) two or more attributes (206) for use as factors (212) for identifying the presence of non-human user activity, the two or more attributes (206) being selected for use as factors (212) based on determined correlations of the attributes (206) with the presence of non-human user software;
defining a threshold factor score for each factor indicating a likelihood of non-human user activity for that factor (212), and defining a threshold combined factor score indicating a likelihood of non-human user activity;
receiving information relating to the plurality of attributes (206) from a user device (304), the user device (304) being a computerized device that is not known to be infected or not infected with non-human user software, generating factor scores (214) for the user device (304) for each of the two or more attributes (206) selected as factors (212), and generating a combined factor score based on the individual factor scores; and
determining a likelihood that the user device (304) is infected with at least one non-human user software by comparing the factor scores (212) from the user device (304) to the threshold factor scores, and comparing the combined factor score (216) from the user device (304) to the threshold combined factor score.

2. A system (600) for identifying non-human user activity on a_computerized device, the system (600) comprising a processor (602A-N), memory (608) accessible by the processor (602A-N), and program instructions and data stored in the memory (608) and executable by the processor (602A-N) to perform:
selecting a plurality of attributes (206) relevant to computerised device activity;
receiving information relating to the plurality of attributes (206) from an infected device group comprising a plurality of computerized devices (202) that are known to be infected with at least one non-human user software and generating a score (210) for each of the plurality of attributes (206) for the infected device group;
receiving information relating to the plurality of attributes (206) from a control device group comprising a plurality of computerized devices (204) that are determined not to be infected with a non-human user software, and generating a score (210) for each of the plurality of attributes (206) for the control device group;
determining correlations between each of the plurality of attributes (206) and the presence of non-human user activity based on the attribute scores (210) generated from the infected device group and the control device group, and defining threshold scores for attributes (206) that are determined to correlate with the presence of non-human user activity;
selecting from the plurality of the attributes (206) two or more attributes (206) for use as factors (212) for identifying the presence of non-human user activity, the two or more attributes (206) being selected for use as factors (212) based on determined correlations of the attributes (206) with the presence of non-human user software:
defining a threshold factor score for each factor indicating a likelihood of non-human user activity for that factor (212), and defining a threshold combined factor score indicating a likelihood of non-human user activity;
receiving information relating to the plurality of attributes (206) from a user device (304), the user device (304) being a computerized device that is not known to be infected or not infected with non-human user software, generating factor scores (214) for the user device (304) for each of the two or more attributes (206) selected as factors (212), and generating a combined factor score based on the individual factor scores; and
determining a likelihood that the user device (304) is infected with at least one non-human user software by comparing the factor scores (212) from the user device (304) to the threshold factor scores, and comparing the combined factor score (216) from the user device (304) to the threshold combined factor score.

3. A computer program product for identifying non-human user activity on a computerized device, the computer program product comprising a non-transitory computer readable medium storing program instructions that when executed by a processor (602A-N) perform:
selecting a plurality of attributes (206) relevant to computerised device activity;
receiving information relating to the plurality of attributes (206) from an infected device group comprising a plurality of computerized devices (202 (202) that are known to be infected with at least one non-human user software and generating a score (210) for each of the plurality of attributes (206) for the infected device group;
receiving information relating to the plurality of attributes (206) from a control device group comprising a plurality of computerized devices (204) that are determined not to be infected with a non-human user software, and generating a score (210) for each of the plurality of attributes (206) for the control device group;
determining correlations between each of the plurality of attributes (206) and the presence of non-human user activity based on the attribute scores (210) generated from the infected device group and the control device group, and defining threshold scores for attributes (206) that are determined to correlate with the presence of non-human user activity;
selecting from the plurality of the attributes (206) two or more attributes (206) for use as factors (212) for identifying the presence of non-human user activity, the two or more attributes (206) being selected for use as factors (212) based on determined correlations of the attributes (206) with the presence of non-human user software:
defining a threshold factor score for each factor indicating a likelihood of non-human user activity for that factor (212), and defining a threshold combined factor score indicating a likelihood of non-human user activity;
receiving information relating to the plurality of attributes (206) from a user device (304), the user device (304) being a computerized device that is not known to be infected or not infected with non-human user software, generating factor scores (214) for the user device (304) for each of the two or more attributes (206) selected as factors (212), and generating a combined factor score based on the individual factor scores; and
determining a likelihood that the user device (304) is infected with at least one non-human user software by comparing the factor scores (212) from the user device (304) to the threshold factor scores, and comparing the combined factor score (216) from the user device (304) to the threshold combined factor score.

4. The method of claim 1, the system of claim 2 or the computer program product of claim 3 wherein the computerized devices (202) of the infected device are intentionally infected by loading infected malware onto the computerized devices (202).

5. The method of claim 1, the system of claim 2 or the computer program product of claim 3 wherein the computerized devices (204) of the control device group are identified based on the occurrence of an online action that is indicative of a human user activity.

6. The method of claim 1, the system of claim 2 or the computer program product of claim 3 wherein the computerized devices (202) of the infected device group are identified based on those computerized devices (202) accessing digital content that is known to use non-human user software and the computerized devices (204) of the control device group are identified based on those computerized devices (204) accessing digital content that is known not to use non-human user software.

7. The method of claim 1, the system of claim 2 or the computer program product of claim 3 wherein the received information from the user device (304) is obtained from code embedded within digital content, the code collecting information about the user device (304) and about activities of the user device (304).

8. The method of claim 1, the system of claim 2 or the computer program product of claim 3 wherein the received information from the user device (304) is obtained from bid requests in an advertising exchange.

9. The method of claim 1, the system of claim 2 or the computer program product of claim 3 wherein the received information from the user device (304) is obtained by analyzing log files of the user device transactions.

## Patentansprüche

1. Verfahren zum Identifizieren einer nicht menschlichen Benutzeraktivität in einer Computervorrichtung, umfassend:
Auswählen einer Vielzahl von für eine Computervorrichtungsaktivität relevanten Attributen (206);
Empfangen von sich auf die Vielzahl von Attributen (206) beziehenden Informationen von einer infizierten Vorrichtungsgruppe, die eine Vielzahl von Computervorrichtungen (202) umfasst, von denen bekannt ist, dass sie mit mindestens einer nicht menschlichen Benutzersoftware infiziert sind, und Erzeugen eines Scores (210) für jedes der Vielzahl von Attributen (206) für die infizierte Vorrichtungsgruppe;
Empfangen von sich auf die Vielzahl von Attributen (206) beziehenden Informationen von einer Kontrollvorrichtungsgruppe, die eine Vielzahl von Computervorrichtungen (204) umfasst, die als nicht mit einer nicht menschlichen Benutzersoftware infiziert bestimmt werden, und Erzeugen eines Scores (210) für jedes der Vielzahl von Attributen (206) für die Kontrollvorrichtungsgruppe;
Bestimmen von Korrelationen zwischen jedem der Vielzahl von Attributen (206) und dem Vorliegen einer nicht menschlichen Benutzeraktivität basierend auf den aus der infizierten Vorrichtungsgruppe und der Kontrollvorrichtungsgruppe erzeugten Attributscores (210) und Definieren von Schwellenwertscores für Attribute (206), die als mit dem Vorliegen einer nicht menschlichen Benutzeraktivität korrelierend bestimmt werden;
Auswählen, aus der Vielzahl von den Attributen (206), von zwei oder mehr Attributen (206) zur Nutzung als Faktoren (212) zum Identifizieren des Vorliegens einer nicht menschlichen Benutzeraktivität, wobei die zwei oder mehr Attribute (206) zur Nutzung als Faktoren (212) basierend auf bestimmten Korrelationen der Attribute (206) mit dem Vorliegen einer nicht menschlichen Benutzersoftware ausgewählt werden;
Definieren eines Schwellenwertfaktorscores für jeden Faktor, der eine Wahrscheinlichkeit einer nicht menschlichen Benutzeraktivität für diesen Faktor (212) anzeigt, und Definieren eines Schwellenwertgesamtfaktorscores, der eine Wahrscheinlichkeit einer nicht menschlichen Benutzeraktivität anzeigt;
Empfangen von sich auf die Vielzahl von Attributen (206) beziehenden Informationen von einer Benutzervorrichtung (304), wobei die Benutzervorrichtung (304) eine Computervorrichtung ist, von der nicht bekannt ist, dass sie mit einer nicht menschlichen Benutzersoftware infiziert oder nicht infiziert ist, Erzeugen von Faktorscores (214) für die Benutzervorrichtung (304) für jedes der zwei oder mehr als Faktoren (212) ausgewählten Attribute (206) und Erzeugen eines Gesamtfaktorscores basierend auf den einzelnen Faktorscores; und
Bestimmen einer Wahrscheinlichkeit, dass die Benutzervorrichtung (304) mit mindestens einer nicht menschlichen Benutzersoftware infiziert ist, durch Vergleichen der Faktorscores (212) von der Benutzervorrichtung (304) mit den Schwellenwertfaktorscores und Vergleichen des Gesamtfaktorscores (216) von der Benutzervorrichtung (304) mit dem Schwellenwertgesamtfaktorscore.

2. System (600) zum Identifizieren einer nicht menschlichen Benutzeraktivität in einer Computervorrichtung, wobei das System (600) einen Prozessor (602A-N), einen Speicher (608), auf den durch den Prozessor (602A-N) zugegriffen werden kann, und Programmbefehle und Daten umfasst, die in dem Speicher (608) gespeichert und durch den Prozessor (602A-N) ausführbar sind, um Folgendes durchzuführen:
Auswählen einer Vielzahl von für eine Computervorrichtungsaktivität relevanten Attributen (206);
Empfangen von sich auf die Vielzahl von Attributen (206) beziehenden Informationen von einer infizierten Vorrichtungsgruppe, die eine Vielzahl von Computervorrichtungen (202) umfasst, von denen bekannt ist, dass sie mit mindestens einer nicht menschlichen Benutzersoftware infiziert sind, und Erzeugen eines Scores (210) für jedes der Vielzahl von Attributen (206) für die infizierte Vorrichtungsgruppe;
Empfangen von sich auf die Vielzahl von Attributen (206) beziehenden Informationen von einer Kontrollvorrichtungsgruppe, die eine Vielzahl von Computervorrichtungen (204) umfasst, die als nicht mit einer nicht menschlichen Benutzersoftware infiziert bestimmt werden, und Erzeugen eines Scores (210) für jedes der Vielzahl von Attributen (206) für die Kontrollvorrichtungsgruppe;
Bestimmen von Korrelationen zwischen jedem der Vielzahl von Attributen (206) und dem Vorliegen einer nicht menschlichen Benutzeraktivität basierend auf den aus der infizierten Vorrichtungsgruppe und der Kontrollvorrichtungsgruppe erzeugten Attributscores (210) und Definieren von Schwellenwertscores für Attribute (206), die als mit dem Vorliegen einer nicht menschlichen Benutzeraktivität korrelierend bestimmt werden;
Auswählen, aus der Vielzahl von den Attributen (206), von zwei oder mehr Attributen (206) zur Nutzung als Faktoren (212) zum Identifizieren des Vorliegens einer nicht menschlichen Benutzeraktivität, wobei die zwei oder mehr Attribute (206) zur Nutzung als Faktoren (212) basierend auf bestimmten Korrelationen der Attribute (206) mit dem Vorliegen einer nicht menschlichen Benutzersoftware ausgewählt werden;
Definieren eines Schwellenwertfaktorscores für jeden Faktor, der eine Wahrscheinlichkeit einer nicht menschlichen Benutzeraktivität für diesen Faktor (212) anzeigt, und Definieren eines Schwellenwertgesamtfaktorscores, der eine Wahrscheinlichkeit einer nicht menschlichen Benutzeraktivität anzeigt;
Empfangen von sich auf die Vielzahl von Attributen (206) beziehenden Informationen von einer Benutzervorrichtung (304), wobei die Benutzervorrichtung (304) eine Computervorrichtung ist, von der nicht bekannt ist, dass sie mit einer nicht menschlichen Benutzersoftware infiziert oder nicht infiziert ist, Erzeugen von Faktorscores (214) für die Benutzervorrichtung (304) für jedes der zwei oder mehr als Faktoren (212) ausgewählten Attribute (206) und Erzeugen eines Gesamtfaktorscores basierend auf den einzelnen Faktorscores; und
Bestimmen einer Wahrscheinlichkeit, dass die Benutzervorrichtung (304) mit mindestens einer nicht menschlichen Benutzersoftware infiziert ist, durch Vergleichen der Faktorscores (212) von der Benutzervorrichtung (304) mit den Schwellenwertfaktorscores und Vergleichen des Gesamtfaktorscores (216) von der Benutzervorrichtung (304) mit dem Schwellenwertgesamtfaktorscore.

3. Computerprogrammprodukt zum Identifizieren einer nicht menschlichen Benutzeraktivität in einer Computervorrichtung, wobei das Computerprogrammprodukt ein nicht flüchtiges computerlesbares Medium umfasst, das Programmbefehle speichert, die, wenn sie durch einen Prozessor (602A-N) ausgeführt werden, Folgendes durchführen:
Auswählen einer Vielzahl von für eine Computervorrichtungsaktivität relevanten Attributen (206);
Empfangen von sich auf die Vielzahl von Attributen (206) beziehenden Informationen von einer infizierten Vorrichtungsgruppe, die eine Vielzahl von Computervorrichtungen (202) umfasst, von denen bekannt ist, dass sie mit mindestens einer nicht menschlichen Benutzersoftware infiziert sind, und Erzeugen eines Scores (210) für jedes der Vielzahl von Attributen (206) für die infizierte Vorrichtungsgruppe;
Empfangen von sich auf die Vielzahl von Attributen (206) beziehenden Informationen von einer Kontrollvorrichtungsgruppe, die eine Vielzahl von Computervorrichtungen (204) umfasst, die als nicht mit einer nicht menschlichen Benutzersoftware infiziert bestimmt werden, und Erzeugen eines Scores (210) für jedes der Vielzahl von Attributen (206) für die Kontrollvorrichtungsgruppe;
Bestimmen von Korrelationen zwischen jedem der Vielzahl von Attributen (206) und dem Vorliegen einer nicht menschlichen Benutzeraktivität basierend auf den aus der infizierten Vorrichtungsgruppe und der Kontrollvorrichtungsgruppe erzeugten Attributscores (210) und Definieren von Schwellenwertscores für Attribute (206), die als mit dem Vorliegen einer nicht menschlichen Benutzeraktivität korrelierend bestimmt werden;
Auswählen, aus der Vielzahl von den Attributen (206), von zwei oder mehr Attributen (206) zur Nutzung als Faktoren (212) zum Identifizieren des Vorliegens einer nicht menschlichen Benutzeraktivität, wobei die zwei oder mehr Attribute (206) zur Nutzung als Faktoren (212) basierend auf bestimmten Korrelationen der Attribute (206) mit dem Vorliegen einer nicht menschlichen Benutzersoftware ausgewählt werden;
Definieren eines Schwellenwertfaktorscores für jeden Faktor, der eine Wahrscheinlichkeit einer nicht menschlichen Benutzeraktivität für diesen Faktor (212) anzeigt, und Definieren eines Schwellenwertgesamtfaktorscores, der eine Wahrscheinlichkeit einer nicht menschlichen Benutzeraktivität anzeigt;
Empfangen von sich auf die Vielzahl von Attributen (206) beziehenden Informationen von einer Benutzervorrichtung (304), wobei die Benutzervorrichtung (304) eine Computervorrichtung ist, von der nicht bekannt ist, dass sie mit einer nicht menschlichen Benutzersoftware infiziert oder nicht infiziert ist, Erzeugen von Faktorscores (214) für die Benutzervorrichtung (304) für jedes der zwei oder mehr als Faktoren (212) ausgewählten Attribute (206) und Erzeugen eines Gesamtfaktorscores basierend auf den einzelnen Faktorscores; und
Bestimmen einer Wahrscheinlichkeit, dass die Benutzervorrichtung (304) mit mindestens einer nicht menschlichen Benutzersoftware infiziert ist, durch Vergleichen der Faktorscores (212) von der Benutzervorrichtung (304) mit den Schwellenwertfaktorscores und Vergleichen des Gesamtfaktorscores (216) von der Benutzervorrichtung (304) mit dem Schwellenwertgesamtfaktorscore.

4. Verfahren nach Anspruch 1, System nach Anspruch 2 oder Computerprogrammprodukt nach Anspruch 3, wobei die Computervorrichtungen (202) der infizierten Vorrichtung durch Laden infizierter Malware in die Computervorrichtungen (202) vorsätzlich infiziert werden.

5. Verfahren nach Anspruch 1, System nach Anspruch 2 oder Computerprogrammprodukt nach Anspruch 3, wobei die Computervorrichtungen (204) der Kontrollvorrichtungsgruppe basierend auf dem Erfolgen einer Online-Aktion, die auf eine menschliche Benutzeraktivität hinweist, identifiziert werden.

6. Verfahren nach Anspruch 1, System nach Anspruch 2 oder Computerprogrammprodukt nach Anspruch 3, wobei die Computervorrichtungen (202) der infizierten Vorrichtungsgruppe basierend darauf, dass diese Computervorrichtungen (202) auf einen digitalen Inhalt zugreifen, von dem bekannt ist, dass er eine nicht menschliche Benutzersoftware nutzt, identifiziert werden und die Computervorrichtungen (204) der Kontrollvorrichtungsgruppe basierend darauf, dass diese Computervorrichtungen (204) auf einen digitalen Inhalt zugreifen, von dem bekannt ist, dass er keine nicht menschliche Benutzersoftware nutzt, identifiziert werden.

7. Verfahren nach Anspruch 1, System nach Anspruch 2 oder Computerprogrammprodukt nach Anspruch 3, wobei die empfangenen Informationen von der Benutzervorrichtung (304) aus innerhalb eines digitalen Inhalts eingebettetem Code erhalten werden, wobei der Code Informationen zu der Benutzervorrichtung (304) und zu Aktivitäten der Benutzervorrichtung (304) sammelt.

8. Verfahren nach Anspruch 1, System nach Anspruch 2 oder Computerprogrammprodukt nach Anspruch 3, wobei die empfangenen Informationen von der Benutzervorrichtung (304) aus Angebotsanforderungen bei einem Werbungsaustausch erhalten werden.

9. Verfahren nach Anspruch 1, System nach Anspruch 2 oder Computerprogrammprodukt nach Anspruch 3, wobei die empfangenen Informationen von der Benutzervorrichtung (304) durch Analysieren von Logdateien der Benutzervorrichtungstransaktionen erhalten werden.

## Revendications

1. Procédé d'identification d'activité d'utilisateur non humain sur un dispositif informatisé comprenant :
une sélection d'une pluralité d'attributs (206) en rapport avec une activité de dispositif informatisé ;
une réception d'informations concernant la pluralité d'attributs (206) en provenance d'un groupe de dispositifs infectés comprenant une pluralité de dispositifs informatisés (202) qui sont connus comme étant infectés avec au moins un logiciel d'utilisateur non humain et une génération d'un score (210) pour chacun de la pluralité d'attributs (206) pour le groupe de dispositifs infectés ;
une réception d'informations concernant la pluralité d'attributs (206) en provenance d'un groupe de dispositifs témoins comprenant une pluralité de dispositifs informatisés (204) qui sont déterminés comme n'étant pas infectés avec un logiciel d'utilisateur non humain, et une génération d'un score (210) pour chacun de la pluralité d'attributs (206) pour le groupe de dispositifs témoins ;
une détermination de corrélations entre chacun de la pluralité d'attributs (206) et la présence d'une activité d'utilisateur non humain sur la base des scores d'attributs (210) générés à partir du groupe de dispositifs infestés et du groupe de dispositifs témoins, et une définition de scores de seuil pour des attributs (206) qui sont déterminés pour effectuer une corrélation avec la présence d'une activité d'utilisateur non humain ;
une sélection à partir de la pluralité des attributs (206) de deux ou plusieurs attributs (206) pour une utilisation à titre de facteurs (212) pour une identification de la présence d'une activité d'utilisateur non humain, les deux ou plusieurs attributs (206) étant sélectionnés pour une utilisation à titre de facteurs (212) sur la base de corrélations déterminées des attributs (206) avec la présence d'un logiciel d'utilisateur non humain ;
une définition d'un score de facteur de seuil pour chaque facteur indiquant une probabilité d'activité d'utilisateur non humain pour ce facteur (212), et une définition d'un score de facteur combiné de seuil indiquant une probabilité d'activité d'utilisateur non humain ;
une réception d'informations concernant la pluralité d'attributs (206) à partir d'un dispositif utilisateur (304), le dispositif utilisateur (304) étant un dispositif informatisé qui n'est pas connu comme étant infecté ou non infecté avec un logiciel d'utilisateur non humain, une génération de scores de facteur (214) pour le dispositif utilisateur (304) pour chacun des deux ou plusieurs attributs (206) sélectionnés à titre de facteurs (212), et une génération d'un score de facteur combiné sur la base des scores de facteur individuels ; et
une détermination d'une probabilité du fait que le dispositif utilisateur (304) est infecté avec au moins un logiciel d'utilisateur non humain en comparant les scores de facteurs (212) à partir du dispositif utilisateur (304) aux scores de facteurs de seuil, et une comparaison du score de facteur combiné (216) provenant du dispositif utilisateur (304) au score de facteur combiné de seuil.

2. Système (600) pour une identification d'activité d'utilisateur non humain sur un dispositif informatisé, le système (600) comprenant un processeur (602A-N), une mémoire (608) accessible par le processeur (602A-N), et des instructions de programme et des données stockées dans la mémoire (608) et exécutables par le processeur (602A-N) pour réaliser :
une sélection d'une pluralité d'attributs (206) en rapport avec une activité de dispositif informatisé ;
une réception d'informations concernant la pluralité d'attributs (206) en provenance d'un groupe de dispositifs infectés comprenant une pluralité de dispositifs informatisés (202) qui sont connus comme étant infectés avec au moins un logiciel d'utilisateur non humain et une génération d'un score (210) pour chacun de la pluralité d'attributs (206) pour le groupe de dispositifs infectés ;
une réception d'informations concernant la pluralité d'attributs (206) en provenance d'un groupe de dispositifs témoins comprenant une pluralité de dispositifs informatisés (204) qui sont déterminés comme n'étant pas infectés avec un logiciel d'utilisateur non humain, et une génération d'un score (210) pour chacun de la pluralité d'attributs (206) pour le groupe de dispositifs témoins ;
une détermination de corrélations entre chacun de la pluralité d'attributs (206) et la présence d'une activité d'utilisateur non humain sur la base des scores d'attributs (210) générés à partir du groupe de dispositifs infestés et du groupe de dispositifs témoins, et une définition de scores de seuil pour des attributs (206) qui sont déterminés pour effectuer une corrélation avec la présence d'une activité d'utilisateur non humain ;
une sélection à partir de la pluralité d'attributs (206) de deux ou plusieurs attributs (206) pour une utilisation à titre de facteurs (212) pour une identification de la présence d'une activité d'utilisateur non humain, les deux ou plusieurs attributs (206) étant sélectionnés pour une utilisation à titre de facteurs (212) sur la base de corrélations déterminées des attributs (206) avec la présence d'un logiciel d'utilisateur non humain ;
une définition d'un score de facteur de seuil pour chaque facteur indiquant une probabilité d'activité d'utilisateur non humain pour ce facteur (212), et une définition d'un score de facteur combiné de seuil indiquant une probabilité d'activité d'utilisateur non humain ;
une réception d'informations concernant la pluralité d'attributs (206) à partir d'un dispositif utilisateur (304), le dispositif utilisateur (304) étant un dispositif informatisé qui n'est pas connu comme étant infecté ou non infecté avec un logiciel d'utilisateur non humain, une génération de scores de facteur (214) pour le dispositif utilisateur (304) pour chacun des deux ou plusieurs attributs (206) sélectionnés à titre de facteurs (212), et une génération d'un score de facteur combiné sur la base des scores de facteur individuels ; et
une détermination d'une probabilité du fait que le dispositif utilisateur (304) est infecté avec au moins un logiciel utilisateur non humain en comparant les scores de facteurs (212) à partir du dispositif utilisateur (304) aux scores de facteurs de seuil, et une comparaison du score de facteur combiné (216) provenant du dispositif utilisateur (304) au score de facteur combiné de seuil.

3. Produit de programme informatique pour une identification d'une activité d'utilisateur non humain sur un dispositif informatisé, le produit de programme informatique comprenant un support lisible par ordinateur non transitoire stockant des instructions de programme qui lorsqu'elles sont exécutées par un processeur (602A-N) réalisent :
une sélection d'une pluralité d'attributs (206) en rapport avec une activité de dispositif informatisé ;
une réception d'informations concernant la pluralité d'attributs (206) en provenance d'un groupe de dispositifs infectés comprenant une pluralité de dispositifs informatisés (202) qui sont connus comme étant infectés avec au moins un logiciel d'utilisateur non humain et une génération d'un score (210) pour chacun de la pluralité d'attributs (206) pour le groupe de dispositifs infectés ;
une réception d'informations concernant la pluralité d'attributs (206) en provenance d'un groupe de dispositifs témoins comprenant une pluralité de dispositifs informatisés (204) qui sont déterminés comme n'étant pas infectés avec un logiciel d'utilisateur non humain, et une génération d'un score (210) pour chacun de la pluralité d'attributs (206) pour le groupe de dispositifs témoins ;
une détermination de corrélations entre chacun de la pluralité d'attributs (206) et la présence d'une activité d'utilisateur non humain sur la base des scores d'attributs (210) générés à partir du groupe de dispositifs infestés et du groupe de dispositifs témoins, et une définition de scores de seuil pour des attributs (206) qui sont déterminés pour effectuer une corrélation avec la présence d'une activité d'utilisateur non humain ;
une sélection à partir de la pluralité d'attributs (206) de deux ou plusieurs attributs (206) pour une utilisation à titre de facteurs (212) pour une identification de la présence d'une activité d'utilisateur non humain, les deux ou plusieurs attributs (206) étant sélectionnés pour une utilisation à titre de facteurs (212) sur la base de corrélations déterminées des attributs (206) avec la présence d'un logiciel d'utilisateur non humain ;
une définition d'un score de facteur de seuil pour chaque facteur indiquant une probabilité d'activité d'utilisateur non humain pour ce facteur (212), et une définition d'un score de facteur combiné de seuil indiquant une probabilité d'activité d'utilisateur non humain ;
une réception d'informations concernant la pluralité d'attributs (206) à partir d'un dispositif utilisateur (304), le dispositif utilisateur (304) étant un dispositif informatisé qui n'est pas connu comme étant infecté ou non infecté avec un logiciel d'utilisateur non humain, une génération de scores de facteur (214) pour le dispositif utilisateur (304) pour chacun des deux ou plusieurs attributs (206) sélectionnés à titre de facteurs (212), et une génération d'un score de facteur combiné sur la base des scores de facteur individuels ; et
une détermination d'une probabilité du fait que le dispositif utilisateur (304) est infecté avec au moins un logiciel utilisateur non humain en comparant les scores de facteurs (212) à partir du dispositif utilisateur (304) aux scores de facteurs de seuil, et une comparaison du score de facteur combiné (216) provenant du dispositif utilisateur (304) au score de facteur combiné de seuil.

4. Procédé selon la revendication 1, système selon la revendication 2, ou produit de programme informatique selon la revendication 3, dans lequel les dispositifs informatisés (202) du dispositif infecté sont volontairement infectés par un téléchargement d'un logiciel malveillant infecté sur les dispositifs informatisés (202).

5. Procédé selon la revendication 1, système selon la revendication 2, ou produit de programme informatique selon la revendication 3, dans lequel les dispositifs informatisés (204) du groupe de dispositifs témoins sont identifiés sur la base de la survenue d'une action en ligne qui indique une activité d'utilisateur humain.

6. Procédé selon la revendication 1, système selon la revendication 2, ou produit de programme informatique selon la revendication 3, dans lequel les dispositifs informatisés (202) du groupe de dispositifs infectés sont identifiés sur la base des dispositifs informatisés (202) accédant à un contenu numérique qui est connu comme utilisant un logiciel d'utilisateur non humain et les dispositifs informatisés (204) du groupe de dispositifs de commande sont identifiés sur la base des dispositifs informatisés (204) accédant à un contenu numérique qui n'est pas connu comme utilisant un logiciel d'utilisateur non humain.

7. Procédé selon la revendication 1, système selon la revendication 2 ou produit de programme informatique selon la revendication 3, dans lequel les informations reçues à partir du dispositif utilisateur (304) sont obtenues à partir d'un code intégré au sein d'un contenu numérique, le code collectant des informations concernant le dispositif utilisateur (304) et des activités du dispositif utilisateur (304).

8. Procédé selon la revendication 1, système selon la revendication 2 ou produit de programme informatique selon la revendication 3, dans lequel les informations reçues à partir du dispositif utilisateur (304) sont obtenues à partir de demandes d'enchères dans un échange de publicités.

9. Procédé selon la revendication 1, système selon la revendication 2 ou produit de programme informatique selon la revendication 3, dans lequel les informations reçues à partir du dispositif utilisateur (304) sont obtenues par analyse de fichiers de journaux des transactions de dispositif utilisateur.
